# EUROPÄISCHE PATENTSCHRIFT

(11) **EP 0 620 365 B1**
(45) Veröffentlichungstag und Bekanntmachung des Hinweises auf die Patenterteilung: **13.12.1995**
(21) Anmeldenummer: 93119961.6
(22) Anmeldetag: 10.12.1993
(51) Int. Cl.: F02M 25/07, F02B 37/00

(54) **Brennkraftmaschine mit Abgasrückführung**
Internal combustion engine with exhaust gas recirculation
Moteur à combustion interne avec recirculation de gaz d'échappement

(30) Priorität: 16.04.1993 DE 4312462
(43) Veröffentlichungstag der Anmeldung: 19.10.1994
(73) Patentinhaber: Krupp MaK Maschinenbau GmbH, 24159 Kiel (DE)
(72) Erfinder: Rautenstrauch, Malte, Dipl.-Ing., D-24248 Mönkeberg (DE)
(74) Vertreter: Hansmann, Dierk, Dipl.-Ing.

(56) Entgegenhaltungen:
- EP-A- 0 046 156
- EP-A- 0 192 219
- PATENT ABSTRACTS OF JAPAN vol. 17, no. 392 (M-1450)22. Juli 1993 & JP-A-05 071 428 (YANMAR DIESEL ENGINE CO LTD) 23. März 1993

## Beschreibung

Die Erfindung bezieht sich auf eine Brennkraftmaschine mit einem Motor, einer Ladeluftleitung, einer Hauptabgasleitung für alle Zylinder einer Abgasrückführleitung und zwei Abgasturboladern.

Zur Verminderung der NOx-Anteile in den Abgasen wird bei Brennkraftmaschinen nach dem Otto-Prinzip ein geregelter Drei-Wege-Katalysator eingesetzt. Bei Otto-Magermotoren, Dieselmotoren und Zweitaktmotoren jeder Bauart zeigen solche Katalysatoren keine Wirkung, da in den Abgasen freier Sauerstoff vorhanden ist. Zur NOx-Minderung bei solchen Motoren wird eine Abgasrückführung angewendet.

Bei Saugmotoren kann das Abgas in den Motor zurückgeführt werden, da der Abgasdruck höher ist als der Ansaugdruck. Bei aufgeladenen Motoren wird zwischen zwei Typarten von Motoren unterschieden. So ist bei kleineren Motoren, wie beispielsweise im Pkw und Lkw mit Turboaufladung der Abgasdruck vor der Turbine des Laders meist höher als der Abgasdruck nach dem Verdichter bzw. vor den Motorzylinder, so daß auch bei diesen Motoren eine Druckdifferenz so ausgestaltet ist, daß Abgas in den Motor gelangen kann.

Dagegen ist es bei Motoren mit einer "echten" Turboaufladung so, daß der mittlere Abgasdruck vor der Turbine des Laders niedriger ist als der Abgasdruck nach dem Verdichter, so daß das Abgas stromab, also hinter der Turbine, nicht in die unter Druck stehende Ladeluftleitung einströmen kann. Zur Behebung dieses Nachteils bleibt nur der aufwendige Weg der Abgasentspannung und eines Neuansaugens durch den Verdichter. Aus der EP-A-0 046 156, die als nächstkommender Stand der Technik zu betrachten ist, sind Abgasturbolader für eine Brennkraftmaschine bekannt, die jeweils von Abgasen aus Abgasleitungen eines V-Motors angetrieben werden. Die Abgase der einen Zylinderreihe des Motors werden einem ersten Turbolader und die Abgase der weiteren Zylinderreihe des Motors werden einem zweiten Turbolader zugeführt, der seine Abgase über die Turbine des zweiten Turboladers dem Verdichter des ersten Turboladers und der Ladeluftleitung zuführt. Desweiteren sind aus der EP-A-0 192 219 Turbolader für eine Brennkraftmaschine bekannt, bei der vor einer Turbine eines ersten Turboladers eine Absaugung der Abgase erfolgt und diese einer weiteren Turbine eines zweiten Turboladers zugeführt werden.

Aufgabe der Erfindung ist es, eine Brennkraftmaschine mit Abgasrückführung zu schaffen, bei der die Abgase in einfacher Weise der verdichteten Ladeluft zuführbar sind.

Diese Aufgabe wird erfindungsgemäß durch die Merkmale des Anspruchs 1 gelöst. Weitere vorteilhafte Merkmale beinhalten die Unteransprüche.

Die mit der Erfindung hauptsächlich erzielten Vorteile bestehen darin, daß mittels eines zweiten Turboladers (Nebenlader) oder eines anderen abgasbetriebenen Verdichters Teile der Abgase so verdichtet werden, daß eine Druckdifferenz geschaffen wird, die es ermöglicht, daß Abgase in die unter Druck stehende Ladeluftleitung stromauf, hinter dem Turbolader (Hauptlader) in die Ladeluftleitung gelangen kann.

Der Nebenlader ist parallel zum Hauptlader in der motorseitigen Abgasleitung angeordnet, wobei ein Teil des abzuführenden Abgases vor dem Hauptlader der Turbine des Nebenladers zugeführt wird.

Eine stromab, hinter dem Hauptlader abgezweigte Abgas-Saugleitung führt über den Verdichter dem Nebenlader verdichtete Abgase hohen Drucks über ein Abgas-Rückführleitung in die Leitung für die Ladeluft entweder vor oder hinter einem Ladeluftkühler ein.

Zur Abkühlung der verdichteten und der Ladeluft zumischbaren Abgase, ist in der Abgas-Rückführleitung ein Abgaskühler angeordnet.

Über Druckbegrenzungsventile ist eine entsprechende Steuerung des Abgasdruckes zum Verdichter und zur Turbine des Nebenladers steuerbar.

Es wird durch die Verwendung eines parallel zum Hauptlader geschaltete Nebenladers und das Absaugen der Abgase durch den Verdichter des Nebenladers nach der Turbine des Hauptladers für ein erhöhtes Turbinendruckverhältnis gesorgt, da vorhandene Abgasgegendrücke vermindert werden können.

Im Hauptlader kann eine schaltbare Turbine vorgesehen sein, die aber nicht zwingend erforderlich ist, zur Erzielung eines höheren Druckes des Abgases als des Druckes der Ladeluft, um eine problemlose Zumischung der Abgase durchführen zu können.

Es ist auch eine Auslegung der Aufladung für den ständigen Betrieb mit Nebenlader und Abgasrückführung denkbar. Dabei werden die Düsenringflächen so aufgeteilt, daß der Hauptlader so viel Abgase nachverdichtet, daß in den Zylindern eine ausreichend hohe Arbeitsgasmenge zur Verfügung steht. Der Vorteil des verbesserten Turbinendruckverhältnisses bleibt erhalten, wie auch die NOx-Verminderung durch Inertisierung des Arbeitsgases mittels Abgaszumischung.

Der ungünstige Effekt der Abgasrückführung auf den Kraftstoffverbrauch durch eine Verbrennungsverschlechterung ist durch die Maßnahme der Aufladung (Turbinenseite) zu kompensieren, so daß der Verbrauchsvorteil des aufgeladenen Dieselmotors gegenüber anderen Kraftmaschinen auch bei der NOx-Absenkung erhalten bleibt.

Ausführungsbeispiele der Erfindung sind in der Zeichnung schematisch dargestellt und werden im folgenden näher beschrieben. Es zeigen:
- Fig. 1: eine schematische Darstellung einer ersten Ausführung einer Brennkraftmaschine mit Abgasrückführung und parallel geschalteten Turboladern, bei denen die Abgas-Rückführleitung nach einem Ladeluftkühler in die Ladeluftleitung eingeführt wird,
- Fig. 2: eine weitere Ausführung gemäß Fig. 1, wobei in der Abgas-Rückführleitung ein Abgaskühler angeordnet ist **und**
- Fig. 3: eine weitere Ausführung, bei der die Abgasrückführleitung zwischen dem Hauptlader und dem Ladeluftkühler in die Ladeluftleitung eingeführt wird.

Eine Brennkraftmaschine 1 weist eine zu den Verbrennungsräumen der Zylinder 2 geführte Leitung 3 für die Ladeluft auf, deren Fluß in Pfeilrichtung 4 verläuft, was in ausgezeichneten Linien der Pfeile dargestellt ist. Die aus dem Motor austretenden Abgase werden über die Leitung 5 in Pfeilrichtung 6 abgeführt bzw. rückgeführt, was in gestrichelten Linien der Pfeile dargestellt ist.

Dem Motor 1 ist ein Abgasturbolader 7 als Hauptlader für die Ladeluft vorgeschaltet, wobei parallel dazu ein weiterer Turbolader 8 als Nebenlader dem Motor 1 nachgeschaltet ist.

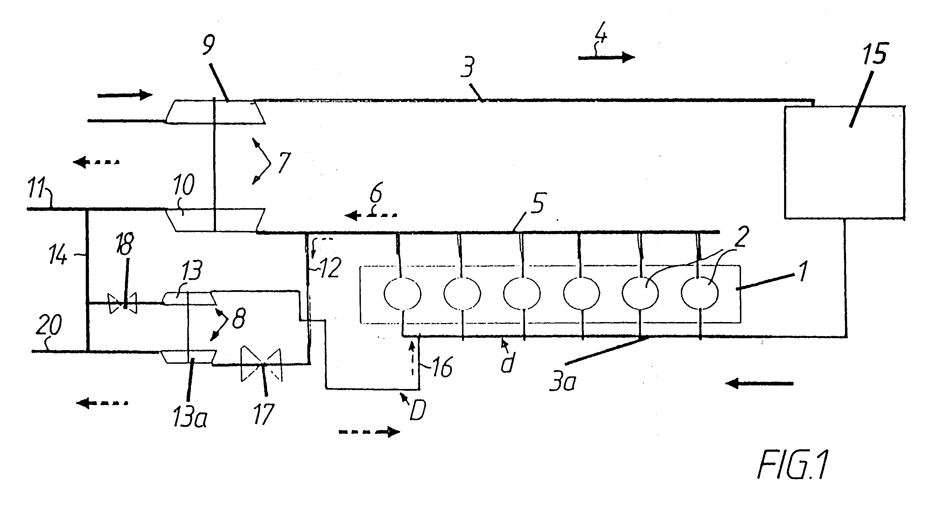

Wie Fig. 1 näher zeigt, wird die Ladeluft in der Leitung 3 über den Verdichter 9 des Hauptlader 7 verdichtet den Zylindern 2 zugeführt, wobei die Turbine 10 vom Abgasstrom in der Leitung 5 angetrieben wird. Über die Turbine 10 wird der Abgasstrom nach außen über die Leitung 11 abgeblasen.

Vor der Turbine 10 des Hauptladers 7 zweigt von der Haupt-Abgasleitung 5 eine Abgas-Druckleitung 12 ab, die die Turbine 13a und somit den Verdichter 13 antreibt. Dem Verdichter 13 wird stromab der Turbine 10 des Hauptladers 7 über eine Abgas-Saugleitung 14 abgezweigtes Abgas zugeführt und verdichtet. Dieses abgezweigte Abgas weist einen höheren Druck D als die Ladeluft mit dem Druck d auf und wird über die Abgas-Rückführleitung 16 in die Leitung 3, 3a zur Vermischung mit der Ladeluft eingebracht.

Zwischen dem Hauptlader 7 und dem Motor 1 ist in der Leitung 3, 3a für die Ladeluft ein Ladeluftkühler 15 angeordnet.

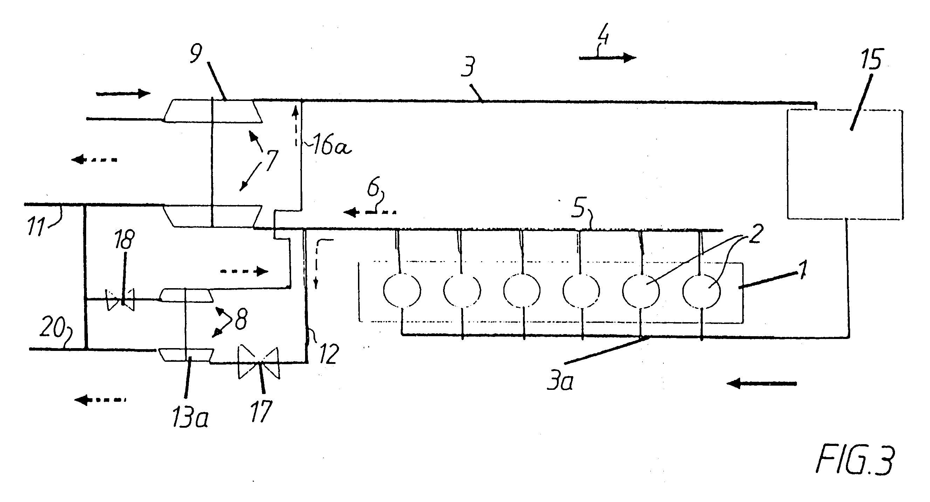

In Fig. 1 ist eine Ausführung gezeigt, bei der die Abgas-Rückführung 15 stromab, hinter dem Ladeluftkühler 15 in die Leitung 3a einmündet. Nach einer weiteren Ausführung gemäß Fig. 3 kann das Abgas auch stromab hinter dem Verdichter 9 des Hauptladers 7 über die Abgas-Rückführleitung 16a in die Ladeluft-Leitung 3 einmünden.

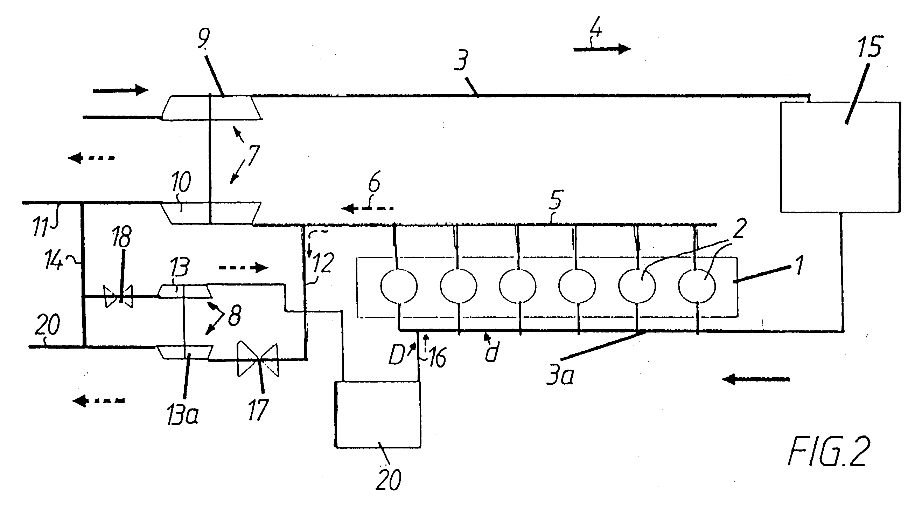

In der Abgas-Rückführleitung 16 kann zur Rückkühlung auch ein Abgaskühler 20 angeordnet sein, wie Fig. 2 näher zeigt.

Zur Druckregelung ist in der Abgas-Druckleitung 12 sowie in der Abgas-Saugleitung 14 jeweils ein Druckregelventil 17, 18 angeordnet. Die Abgas-Saugleitung 12 ist mit der Austrittsleitung 20 verbunden, so daß bei geschlossenem Druckventil 18 die Abgase ohne Durchlauf des Verdichters 13 abgeleitet werden.

Es ergibt sich ein Betrieb der Brennkraftmaschine 1 in folgenden Kombinationen:
Bei einem normalen Betrieb, der nicht NOx minimiert ist, wie beispielsweise bei Seebetrieb, ist der Hauptlader 7 voll im Betrieb und der Nebenlader 8 ist abgeschaltet.

Ein schadstoffarmer Betrieb wird erreicht, wenn die Hauptturbine 10 zu 30% abgeschaltet ist und ca 30% Abgas am Nebenlader 8 Arbeit leistet und es wird ca 30% des Abgases so verdichtet, daß es der Ladeluftleitung 3, 3a zugeführt werden kann.

Es wird ein Betrieb, wie vorstehend ausgeführt, wobei nur das rückgeführte Abgas nach einer Verdichtung mittels des Abgaskühlers 20 gekühlt und mit der Ladeluft gemischt wird.

Eine weitere Möglichkeit des Betriebes der Brennkraftmaschine 1 besteht darin, das rückgeführt Abgas nach dem Verdichter 9 des Hauptladers 7 mit der Ladeluft zu mischen und dann mittels des zwischengeschalteten Ladeluftkühlers 15 zu kühlen.

## Patentansprüche

1. Brennkraftmaschine mit einem Motor (1), einer Ladeluftleitung (3a,4), einer Hauptabgasleitung (5) für alle Zylinder einer Abgasrückführleitung (16,16a) und zwei Abgasturboladern (7,8), wobei dem Motor der erste Abgasturbolader (7) als Hauptlader für die Luft vorgeschaltet und parallel dazu der zweite Abgasturbolader (8) als Nebenlader dem Motor (1) nachgeschaltet ist und die Ladeluft unter Durchströmung eines Ladeluftkühlers (15) dem Motor (1) zuführbar ist, wobei die Motorabgase über die Turbine (10) des ersten Abgasturboladers (7) nach außen ableitbar sind und die Turbine (13a) des zweiten Turboladers (8) vom Motorabgas einer von der Hauptabgasleitung (5) abgezweigten Abgasdruckleitung (12) antreibbar ist und dem Verdichter (13) des zweiten Turboladers (5) stromab der Turbine (10) des ersten Turboladers (7) über eine Abgas-Saugleitung (14) abgezweigtes Abgas zugeführt wird und daß die somit verdichteten Abgase über die Abgas-Rückführleitung (16,16a) der Ladeluftleitung (3,3a) zuführbar sind und daß dieser zurückgeführte Abgasstrom in der Rückführleitung (16,16a) einen höheren Druck (D) aufweist, als die dem Motor (1) über den Verdichter (9) des Turboladers (7) zugeführte Ladeluft mit einem Druck (d).

2. Brennkraftmaschine nach Anspruch 1, dadurch gekennzeichnet, daß die verdichteten Abgase hohen Druckes (D) in die die Ladeluft führenden Leitung (3) stromauf vor dem Lade-Luftkühler (15) zuführbar sind.

3. Brennkraftmaschine nach Anspruch 1, dadurch gekennzeichnet, daß die verdichteten Abgase hohen Druckes (D) in die die Ladeluft führenden Leitung (3a) stromab hinter dem Lade-Luftkühler (15) zuführbar sind.

4. Brennkraftmaschine nach einem der Ansprüche 1 bis 3, dadurch gekennzeichnet, daß in der Abgas-Rückführleitung (16) ein Abgaskühler (20) vor Eintritt in die Lade-Luftleitung (3a) angeordnet ist.

5. Brennkraftmaschine nach einem der Ansprüche 1 bis 4, dadurch gekennzeichnet, daß in der Abgas-Druck- und -Saugleitung (12 und 14) jeweils ein Druckregelventil (17 und 18) angeordnet ist.

## Claims

1. Internal combustion engine having an engine (1), a charging air line (3a, 4), a main exhaust gas line (5) for all cylinders of an exhaust gas recirculation line (16, 16a) and two exhaust gas turbochargers (7, 8), wherein the first exhaust gas turbocharger (7) is installed upstream of the engine as the main charger for the air and, parallel thereto, the second exhaust gas turbocharger (8) is installed downstream of the engine (1) as the secondary charger and the charging air is suppliable with simultaneous flow through a charging air cooler (15) to the engine (1), wherein the engine exhaust gases are divertable outwards via the turbine (10) of the first exhaust gas turbocharger (7) and the turbine (13a) of the second turbocharger (8) is drivable by the engine exhaust gas of an exhaust gas delivery line (12) branched off from the main exhaust gas line (5) and exhaust gas diverted downstream of the turbine (10) of the first turbocharger (7) via an exhaust gas suction line (14) is supplied to the compressor (13) of the second turbocharger (8) and that the exhaust gases thus compressed are suppliable via the exhaust gas recirculation line (16, 16a) to the charging air line (3, 3a) and that said recirculated exhaust gas flow in the recirculation line (16, 16a) has a higher pressure (D) than the charging air, which is supplied to the engine (1) via the compressor (9) of the turbocharger (7) and has a pressure (d).

2. Internal combustion engine according to claim 1, characterized in that the compressed exhaust gases of high pressure (D) are suppliable upstream of the charging air cooler (15) into the line (3) carrying the charging air.

3. Internal combustion engine according to claim 1, characterized in that the compressed exhaust gases of high pressure (D) are suppliable downstream of the charging air cooler (15) into the line (3a) carrying the charging air.

4. Internal combustion engine according to one of claims 1 to 3, characterized in that an exhaust gas cooler (20) is disposed in the exhaust gas recirculation line (16) in front of the inlet into the charging air line (3a).

5. Internal combustion engine according to one of claims 1 to 4, characterized in that a respective pressure regulating valve (17 and 18) is disposed in the exhaust gas delivery line and the exhaust gas suction line (12 and 14).

## Revendications

1. Moteur à combustion interne qui comporte un moteur (1), un conduit à air de suralimentation (3a, 4), un conduit à gaz d'échappement principal (5) pour tous les cylindres, un circuit de recirculation de gaz d'échappement (16, 16a) et deux turbocompresseurs à suralimentation à gaz d'échappement (7,8), dans lequel le premier turbocompresseur à suralimentation à gaz d'échappement (7) est monté en amont du moteur en tant que compresseur à suralimentation principal pour l'air et, parallèlement à cela, le second turbocompresseur à suralimentation à gaz d'échappement (8) est monté en aval du moteur (1) en tant que compresseur à suralimentation secondaire et l'air de suralimentation peut être amené au moteur (1) en passant par un refroidisseur d'air de suralimentation (15), dans le cas duquel les gaz d'échappement du moteur peuvent être rejetés vers l'extérieur en passant par la turbine (10) du premier turbocompresseur à suralimentation à gaz d'échappement (7) et la turbine (13a) du second turbocompresseur à suralimentation (8) peut être commandée par le gaz d'échappement du moteur d'un conduit sous pression à gaz d'échappement (12) constituant un branchement de ramification du conduit à gaz d'échappement principal (5) et
du gaz d'échappement dérivant par un conduit d'aspiration à gaz d'échappement (14) est amené au compresseur (13) du second turbocompresseur à suralimentation (8) en aval de la turbine (10) du premier turbocompresseur à suralimentation (7), les gaz d'échappement ainsi comprimés pouvant être amenés au conduit à air de suralimentation (3, 3a) en passant par le conduit de recirculation de gaz d'échappement (16, 16a) et ce courant de gaz d'échappement remis en circulation dans le conduit de recirculation (16, 16a), présentant une pression plus élevée (D) que l'air de suralimentation, ayant une pression (d), amené au moteur (1) en passant par le compresseur (9) du turbocompresseur à suralimentation (7).

2. Moteur à combustion interne suivant la revendication 1, caractérisé en ce que les gaz d'échappement comprimés présentant une pression élevée (D) peuvent être amenés dans le conduit (3) acheminant l'air de suralimentation en amont, c'est-à-dire à l'avant du refroidisseur d'air d'alimentation (15).

3. Moteur à combustion interne suivant le revendication 1, caractérisé en ce que les gaz d'échappement comprimés présentant la pression élevée (D) peuvent être amenés dans le conduit (3a) acheminant l'air de suralimentation en aval, c'est-à-dire à l'arrière du refroidisseur d'air de suralimentation (15).

4. Moteur à combustion suivant l'une quelconque des revendications 1 à 3, caractérisé en ce que dans le conduit de recirculation de gaz d'échappement (16), il est monté un refroidisseur de gaz d'échappement (20) en avant de l'entrée dans le conduit à air de suralimentation (3a)

5. Moteur à combustion interne suivant l'une quelconque des revendications 1 à 4, caractérisé en ce que dans chacun des conduits sous pression et d'aspiration de gaz d'échappement (12 et 14), il est monté une valve de régulation de pression (les valves de régulation de pression respectives 17 et 18).
